Europäisches Patentamt

European Patent Office

Office européen des brevets

(11) Publication number: **0 324 309**
**A2**

# EUROPEAN PATENT APPLICATION

(21) Application number: **88500111.5**

(51) Int. Cl.⁴: **G01V 3/10**

(22) Date of filing: **22.11.88**

(30) Priority: **15.01.88 ES 8800087**

(43) Date of publication of application:
**19.07.89 Bulletin 89/29**

(84) Designated Contracting States:
**AT BE CH DE FR GB GR IT LI LU NL SE**

(71) Applicant: **Llamas Llamas, Francisco Javier**
**30, calle Alejandro Rodriguez**
**E-28039 Madrid(ES)**

Applicant: **Gosalbez Gosalves, Francisco Jose**
**30, calle Alejandro Rodriguez**
**E-28039 Madrid(ES)**

(72) Inventor: **Llamas Llamas, Francisco Javier**
**30, calle Alejandro Rodriguez**
**E-28039 Madrid(ES)**
Inventor: **Gosalbez Gosalves, Francisco Jose**
**30, calle Alejandro Rodriguez**
**E-28039 Madrid(ES)**

(74) Representative: **De la Fuente Fernandez, Dionisio**
**4 calle Santa Engracia**
**E-28010 Madrid(ES)**

(54) **Magnetic metal detector system.**

(57) Le Système Détecteur de Matériaux Magnétiques faisant l'objet de cette invention edst un ensamble constitu'e par en circuit électronique où il y a un microprocesseur qui 'emet le signal à partir duquel on génére les autres signaux dont ont a besoin, qui passent à travers un synthétiseur de fréquences d'ou les signaux sortent vers des bobines qui constituent l'antenne d'émission, une fois filtrés et amplifiés. Ces signaux génèrent le signal de l'échantillon qui est capté par une autre antenne réceptrice, d'où une fois amplifiés et filtrés et dépourvus de tous les possible éléments de distorsion, ils sont envoyés à des filtres de fréquence appropriée pour obtenir a la sortie des signaux d'amplitude proportionnelle aux signaux générés sur l'échantillon, qui sont portés au microprocesseur et fournissent les données de sortie qui sont présentés sur l'écran.

## ETAT ACTUEL DE LA TECHNIQUE

A l'heure actuelle, il y a beaucoup de systèmes et d'appareils détecteurs de métaux qui sont constitués par émetteurs et recepteurs convenablement accouplés pour émettre et recevoir des signaux qui, moyennent la création d'un champ magnétique, reçoivent ceux en provenance des matériaux magnétiques que l'on veut, mais toujours d'un même type de matériau magnétique, sans aucune possibilité de capter d'autres signaux qui sont hors de la portée de l'emetteur utilisé parce qu'ils présentent des cycles d'hystérésis différents.

## DESCRIPTION

Afin de pallier cet inconvénient et de réussir à distinguer des matériaux magnétiques différents ayant des différents cycles d'hystérésis, on a conçu ce nouvel système qui fait l'objet de cet exposé des motifs et qui moyennant l'émission de deux champs magnétiques à fréquences différentes et à l'amplitude propre pour ce que l'on peut agir sur la zone non-linéaire du cycle d'hystérésis, permet de produire un battement des fréquences ci-dessus. C'est donc, en fonction du cycle d'hystérésis du matériau dont il s'agit et d'autres facteurs, que l'on obtiendra l'amplitude des produits resultant du battement ci-dessus.

L'étude posterieur de l'amplitude et le rapport entre ces produits réussira à distinguer les différents matériaux détectés ayant des cycles d'hystérésis différents.

Essentiellement, le système est composé d'un transmetteur et d'un ensemble électronique, le transmetteur étant constitué par une ou plusieurs bobines dans une disposition et dans un nombre qui dépendent du type d'application; le recepteur, par une o plusieurs paires de bobines; et le circuit électronique, par un microprocesseur qui fournit un signal à partir de laquelle on génère les autres signaux dont on a besoin, en même temps qu'il traite les signaux reçus et qu'il présente le resultat de ce traitement sur uun écran extérieur.

Ce sont deux des signaux ci-dessus qui, dûment filtrés et amplifiés, alimentent aux bobines du transmetteur du courant nécessaire pour l'émission des champs magnétiques preétablis tandis ce que les autres bobines contrôlent les différentes fréquences centrales ou de coupage des filtres recevant les signaux reçus par l'antenne réceptrice afin que ces signaux filtrés et amplifiés soit alimentés au microprocesseur pour ce qu'ils soient analysés et que le résultat soit présenté sur l'écran extérieur.

Ce système permet donc de réaliser des opérations que les systèmes actuellement en existence ne sont pas capables d'effectuer telles que la détection des matériaux contenant des matériaux magnétiquement mous tels que le permalloy, le micro-métau, et des métaux, etc. à fréquence de transmission basse,en sélectionnant ces fréquences d'entre les valeurs proches afin d'analyser les produits fournissant des amplitudes de signal comprises dans ces valeurs. Cela permet de réduire le champ d'activité en limitant les matériaux à détecter à ceux qui présentent des cycles d'hystérésis différents. Le système de détection de matériaux magnétiques ci-dessus sera décrit ci-dessous en détail tout en faisant allusion à un exemple d'exécution susceptible de toute sorte de variations en forme et en détail qui n'impliquent pas d'altération fondamentale des caractéristiques du même.

Afin de mieux décrire cet exemple d'exécution, il est accompagné des plans ci-joints sur lesquels on représente ce qui suit:

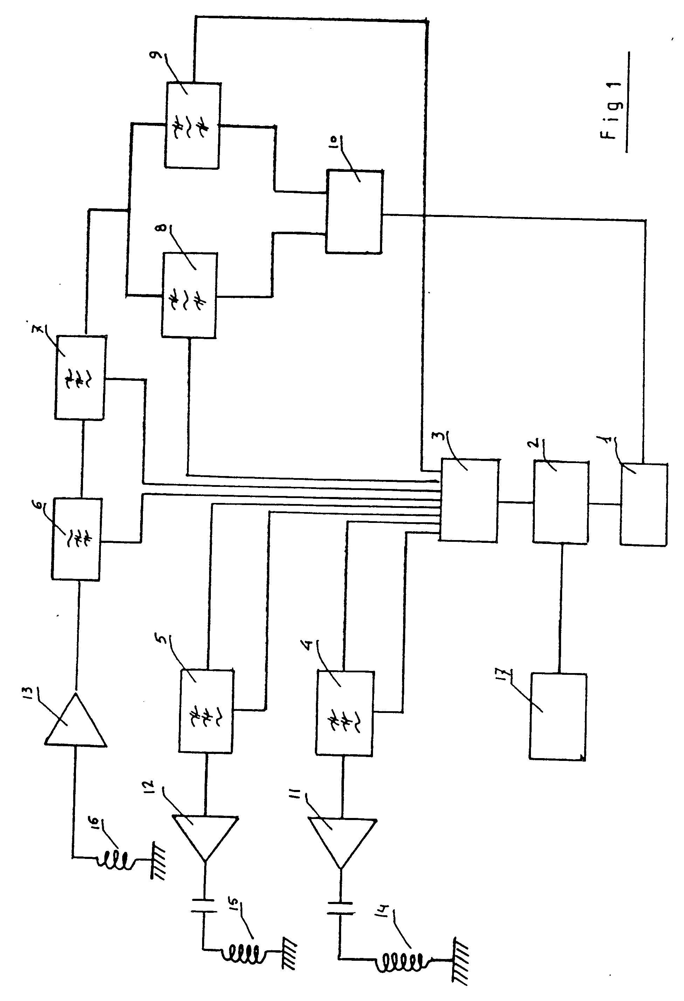

Figure 1. Schéma fonctionnel de l'ensemble du système.

Figure 2. Schéma fonctionnel en détail de l'étage de récep tion.

Conformément à cet exemple, le système se compose d'un circuit électronique où un microprocesseur (1) envoie un signal à une certaine fréquence à une interface (2) et d'ici à un synthétiseur de fréquences (3) constitué par une suite d'éléments à diviseurs programmables et contrôlables par le microprocesseur (1) afin que deux signaux sortissent de ce synthétiseur (3) chacun à un filtre passe-bas (4 et 5) placés devant deux amplificateurs de puissnce (11 et 12) qui alimentent du courant aux bobines (14 et 15) de l'antenne d'émission.

Des signaux ci-dessus, les uns sont les signaux aux fréquences d'emission et les autres, les signaux aux fréquence de contrôle de la fréquence de coupage du filtre, puisque tous les filtres utilisés sont des filtres à capacités commutées.

Ces signaux émis par l'antenne émettrice (14 et 15) produissent le signal sur l'échantillon de matériau qui est reçu par l'antenne réceptrice composé par la bobine (16), de laquelle le signaux amplifié par l'amplificateur (13) et filtré par un filtre passe-haut (6) et un filtre passe-bas (7), est postérieurement envoyé à deux autres filtres (8 et 9) passe-bande à largeur de bande appropriée àu cas et à fréquence de contrôle adéquate à celle utilisé dans l'émission de signaux. C'est donc qu'à la sortie de ces filtres on obtient des sginaux d'amplitude proportionnelle à celle des signaux générés sur l'échantillon. Ces signaux passent a l'interface (10) d'où ils sont envoyés au microprocesseur pour ce qu'il y soient analysés et que le résultat de cette analyse soit présenté sur l'écran extérieur.

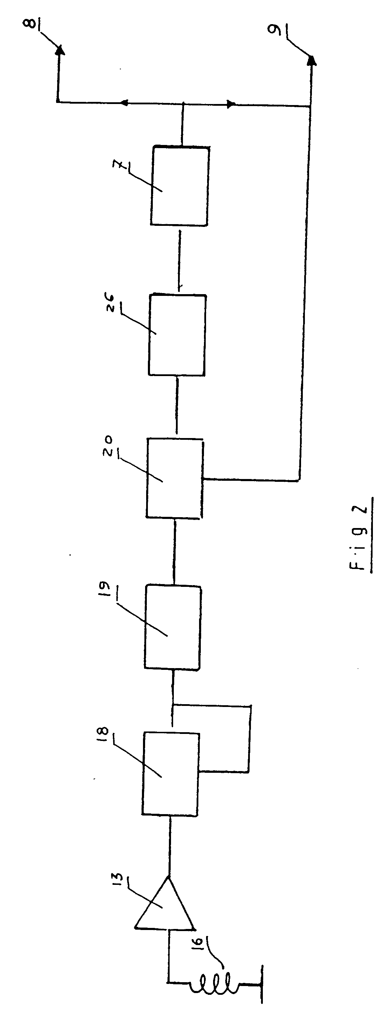

Ce procédé génériquement décrit est prévu dans l'étage de réception avec plus d'éléments de précision tel que l'on le détaille à la figure 2 puisque bien que l'antenne est mécaniquement et électroniquement équilibré afin d'obtenir un minimum de signaux transmis à l'antenne réceptrice (16),après l'amplificateur 913) on a prévu un élément (18) que empêche la distorsion du signal aux étages postérieurs ce qui résulte en une falsification du résultat, et ensuite un filtre (19) dont la fréquence est compris dans les fréquences utilisées à l'émission afin d'atténuer ces fréquences, et ensuite un deuxième élément similaire à l'élément ci-dessus (20) réalimenté par la sortie du récepteur proprement dit. D'ici les signaux passent au filtre (6) et les autres étages décrits ci-dessus.

La fréquencer choisie sera fonction du bruit qu'il y a dans les lieux d'installation du système. Cette fréquence sera usuellement compris entre 200 et 300 Hz il étant prévu que les fréquences d'émission soient suffisamment écartées des fréquences normales du réseau afin d'éviter qu'elles ne déforment les résultats.

Les matériaux, la forme et les dimensions peuvent être variables de même que tout ce qui est accessoire et secondaire pourvu qu'il n'altère, ne change ou ne modifie l'essentiel du système décrit.

## Claims

Ie. SYSTEME DETECTEUR DE MATERIAUX MAGNETIQUES caractérisé parce qu'il se compose d'un transmetteur, un récepteur et un circuit électronique où tant l'émetteur que le récepteur sont constitués par une ou plusieurs bobines dans une disposition et en un nombre que dépendent du type d'application et le circuit électronique est constitué par un microprocesseur qui fournit le signal à partir duquel on génère les autres signaux dont on a besoin, en même temps qu'il traite les signaux reçus afin de faire une analyse et de visualiser le résultat du procédé sur un écran.

IIe. SYSTEME DETECTEUR DE MATERIAUX MAGNETIQUES selon la revendication Ie. ci-dessus, caractérisé parce que le microprocesseur est pourvue pour ce qu'il envoie en chaque cas un signal d'une certaine fréquence à un interface qui la renvoie à un synthétiseur de fréquences à diviseurs programmables et contrôlables par le microprocesseur afin que du microprocesseur deux signaux sortent à deux filtres passe-bas et d'ici, à deux amplificateurs de fréquence qui débitent le courant nécessaire aux bobines de l'antenne d'emission.

IIIe. SYSTEME DETECTEUR DE MATERIAUX MAGNETIQUES selon les revendications Ie. et IIe. ci-dessus caractérisé par le fait qu'il est pourvu d'une antenne réceptrice qui capte les signaux générés sur l'échantillon, qui sont amplifiés et filtrés a fin d'être envoyés a un deuxième étage de filtres de fréquence apropriée au cas pour obtenir à la sortie des signaux d'amplitude proportionnelle à ceux générés sur l'échantillon . Ces signaux sont portées au microprocesseur pour y être analysés. Le résultat de cette analyse est présenté sur l'écran.

IVe. SYSTEME DETECTEUR DE MATERIAUX MAGNETIQUES selon les revendications Ie., IIe. et IIIe., caractérisé parce qu'à l'étage de réception après l'amplificateur ont a prevu des moyens pour empêcher la distorsion du signal, un filtre dont la fréquence est comprise entre les fréquences utilisées pour l'émission et un deuxième moyen similaire au premier et réalimenté par le courant de sortie du récepteur proprement dit afin que le signal entre dans l'étage final sans aucune type de distorsion qui pourraiet dénaturer les résultats obtenus.

Ve. SYSTEME DETECTEUR DE MATERIAUX MAGNETIQUES Tel que l'on le décrit et revendique à ce Mémoire Descriptif composé de sept feuilles numérotées et dactylographiées d'un seul côté, et deux plans qui l'illustrent.

Fig 1

EP 0 324 309 A2

Fig 2

EP 0 324 309 A2